# EUROPEAN PATENT SPECIFICATION

(11) **EP 2 778 559 B1**
(45) Date of publication and mention of the grant of the patent: **22.02.2017**
(21) Application number: 14159200.6
(22) Date of filing: 12.03.2014
(51) Int. Cl.: B21D 53/02, B21C 23/02, F24H 1/08, F28F 3/04, F28F 13/06, F28F 21/08, F24H 8/00, F24H 9/00, F28F 7/02, F28F 13/08, F24H 1/32, F28D 9/00, F24H 1/28

(54) **Heat exchanger and body therefore, and a method for forming a heat exchanger body**
Wärmetauscher und Körper und ein Verfahren zur Herstellung eines Wärmetauscherkörpers
Echangeur de chaleur et le corps, et procédé de fabrication d'un corps d'échangeur de chaleur

(30) Priority: 12.03.2013 NL 2010442
(43) Date of publication of application: 17.09.2014
(73) Proprietor: Dejatech Holding B.V., 5951 DB Belfeld (NL)
(72) Inventor: Deckers, Jan Hubertus, 5951 DB Belfeld (NL); Thijssen, Paulus Mathijs Maria, 5951 DB Belfeld (NL)
(74) Representative: V.O.

(56) References cited:
- EP-A1- 1 722 172
- WO-A1-2009/053248
- WO-A2-2010/098666
- DE-A1- 2 948 838
- DE-A1-102005 010 508

## Description

The invention relates to a heat exchanger.

Heat exchanger bodies made of light metal such as aluminum or aluminum alloy are well known in the art and are commonly cast using lost core technology. Various embodiments of such heat exchanger bodies are known from for example Dejatech BV, Belfeld, NL. Such heat exchanger bodies have been used in many different heating appliances such as central heating and sanitary water heating appliances of different manufacturers. Casting provides for relatively high degrees of designer freedom, but is costly, in tooling, handling and in machining. Moreover such production methods are labor intensive and lead to relatively much refuse and lost materials.

WO2010/098666 discloses a heat exchanger made using extrusion of light metal. In this disclosure two parts of a heat exchanger body are extruded, each comprising a wall and a series of ribs as partitioning walls for forming flue duct sections or duct sections. The parts are connected to each other with the ribs facing each other. End portions of intermediate walls are removed by machining for forming connections between the sections of the ducts to form a continuing flue duct. A burner is connected to one end of the duct, whereas an exhaust is mounted to the opposite end of the duct. In this disclosure the main flow direction of the flue gases in the different sections is parallel to the extrusion direction of the parts.

A heat exchanger according to WO2010/098666 has the advantage over cast heat exchangers that the extrusion process is relatively easy, that no cores have to be removed and that cleaning of the parts before assembly is relatively easy, if necessary. Moreover the heat capacity of the heat exchanger can easily be chosen by cutting off a different length of extruded profile for forming the parts. The need for machining after extrusion is, although limited compared to cast heat exchangers, still significant. Moreover, since of most of the ribs parts need to be removed, relatively much material still is lost. Furthermore the contact between gas and the duct walls may not always be optimal.

The present disclosure has as an aim to provided an alternative heat exchanger, or an alternative heat exchanger body. An aim is to provided a heat exchanger body formed using extrusion of parts thereof. An aim is to provided a heat exchanger body which reduces the need for machining and/or the loss of material compared to known heat exchangers as discussed having comparable capacity. The present disclosure additionally or alternatively aims at providing a heat exchanger which has a body made of light metal which has a high heat exchanging capacity/volume ratio. The present disclosure additionally or alternatively aims at providing a heat exchanger which has a body made of light metal which can be manufactured in an easy and reliable manner, for example using bonding technology as described in WO2010/098666.

At least one of these aims separately or in combination can be achieved with a heat exchanger and/or heat exchanger body and/or method according to this disclosure.

DE102005010508 discloses a heat exchanger according to the preamble of claim 1. WO2010/098666 discloses a method according to the preamble of claim 15.

In an aspect of the present disclosure a heat exchanger can be defined by two parts, made by extrusion and comprising an inner wall with ribs extending therefrom, which parts define an extrusion direction parallel to a length direction of the ribs, wherein in assembled condition between the parts and especially between the ribs a flue duct is defined having a main flow direction which extends in a direction substantially perpendicular to the extrusion direction.

In an aspect of the present disclosure a heat exchanger can be defined by two parts, made by extrusion and each comprising an inner wall with ribs extending therefrom, which parts define an extrusion direction parallel to a length direction of the ribs, wherein in assembled condition between the parts and especially between the ribs a flame receiving space is formed, having a main flow direction extending in a direction substantially perpendicular to the extrusion direction. The flame receiving space connects to a flue duct, for example as described in the previous paragraph, and widens in the opposite direction, ribs of opposite parts being spaced apart such that between the ribs a free and unobstructed space is provided.

A heat exchanger according to the invention comprises a heat exchanger body made of light metal or light metal alloy, wherein the body comprises at least a flue duct and a flame receiving space, wherein the body comprises two parts at opposite sides of the flue duct and flame receiving space, said two parts substantially defining said flue duct and flame receiving space, wherein the flue duct and flame receiving space define a main flow direction for flue gas between an entry side of the flame receiving space and an outlet of the flue duct, wherein each of said parts comprises a first series of ribs extending into the space between said two parts and having a length direction substantially perpendicular to the main flow direction for flue gas, thus defining a meandering flow path of flue gasses between said flame receiving space and said outlet and a second series of ribs extending in said flame receiving space, wherein between the ribs of said second series of opposite parts an open space is provided.

In an aspect a method of the present disclosure can be defined by forming at least two parts by extrusion, each having an inner wall from which parallel ribs extend, which parts are positioned with the inner surfaces facing each other and are connected by end parts, such that said two parts substantially define a flue duct and a flame receiving space opening into said flue duct, wherein the flue duct and flame receiving space define a main flow direction for flue gas between an entry side of the flame receiving space and an outlet of the flue duct substantially perpendicular to an extrusion direction of the parts. In embodiments the parts may be connected such that the ribs define a meandering flow path of flue gasses between said flame receiving space and said outlet, and wherein between the ribs of said opposite parts in the flame receiving space an open space is provided.

The present invention shall be further elucidated in the following description, with reference to the drawings, in which:
Fig. 1 shows a heat exchanger, schematically, in perspective view, partly broken away;
Fig. 2 two parts of a heat exchanger body for a heat exchanger, for example according to fig. 1, in side view;
Fig. 3 schematically part of a water duct of a heat exchanger according to the disclosure, connected to a heating circuit; and
Fig. 4 schematically part of an alternative embodiment in side view.

In this description different embodiments of heat exchangers and parts thereof, as well as heating circuits equipped therewith are disclosed and described by way of example only. In these embodiments the same or similar parts have the same or similar reference signs. Combinations of parts of the embodiments shown are also considered to have been disclosed herein. In this description a heat exchanger as to be understood as an exchanger for exchanging heat between heated flue gasses from a burner and water flowing through one or more water channels within said heat exchanger. Preferably a flame receiving space is provided over and/or into which a burner can be inserted, such that said heated flue gasses are actively created, during use, within said heat exchanger. In an alternative the burner can be at least partly integrated in the heat exchanger, for example by extrusion, casting and/or machining. Such heat exchangers are especially, but not exclusively suitable in domestic and commercial heating systems such as boilers and central heating systems, such as for space heating and/or tap water heating systems.

In the following description extrusion, possibly combined with machining of extruded parts, shall be described as an advantageous means for manufacturing parts of such heat exchanger. Nevertheless, some or all of these parts can also be made by casting, such as but not limited to injection moulding, sand or otherwise lost core moulding or casting or the like, possibly combined with machining, such as but not limited to grinding, turning, milling, drilling and the like known machining methods.

In this description light metal is at least to be understood as including non-ferro metal and non-ferro metal alloy having a density of less than 4500 kg/m³. Preferred materials are aluminum and aluminum alloy.

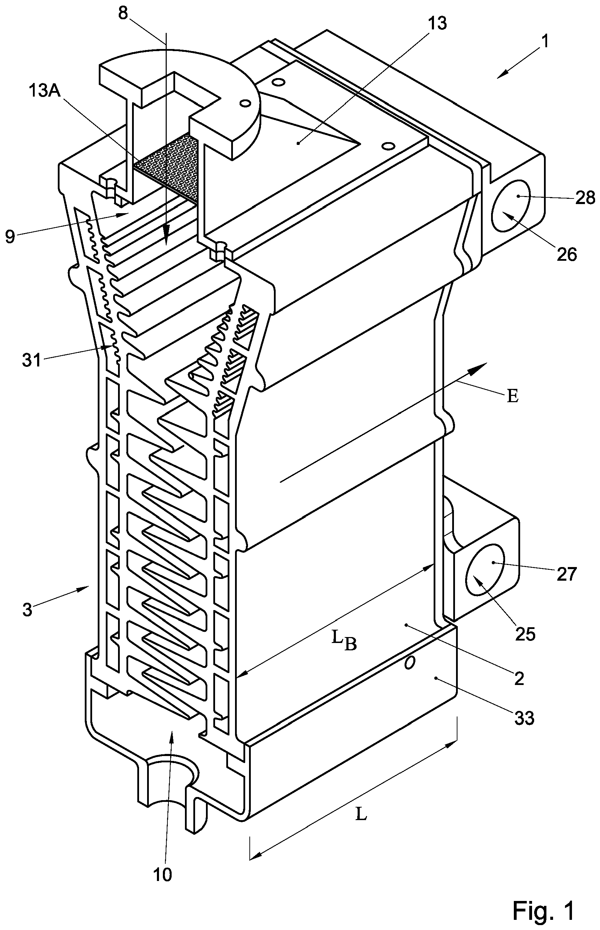

In this description wording like top and bottom and sides are used as references only, without limiting the possible positioning of the heat exchanger or parts thereof in use. In this description top and bottom are used as defined in fig. 1, 2 and 4, where the flame receiving space is shown at the top and the outlet for gas is at the bottom.

In this description words like substantially and about indicate that slight deviations from a dimension or orientation to which they refer is allowable, for example less than 20%, more preferably les than 15%, for example up to 10%.

In this description bonding has to be understood as forming an adhesive connection between two or more parts using an elastic bonding agent. Especially suitable is a glue or adhesive which after curing is still flexible and elastically deformable. Preferably the bonding agent is heat resistant to temperatures above 120°C, preferably above 150°C, more preferably above 170°C. A glue can be used having a temperature resistance up to 180°C or above. A glue can be used having a use temperature range between about -4 and +120 °C, preferably between about -20 and +150 °C, more preferably between about -40 and + 170 °C, even more preferably between at least -55 and 180 °C or higher (e.g. PSI S406). A temperature range should be understood as a range of temperatures in which the glue maintains at least most of its elastic and bonding properties, such that in a heat exchanger at least the bonding maintains pressure resistant and fluid and gas tight. Pressure resistant is in this context to be understood as at least resistant to pressures in an adjoining space of above 2 bar, preferably above 4 bar, more preferably at least to 10 bar. The desired pressure resistance can be as high as 20 bar or above. One bar is 100.000 Pascal or 0.1 MPa. Reference can be made to adhesion to peel, according to ASTM C794.

Elastic bonding agent, such as glue or adhesive should be understood as an agent which, after curing, has during use, a high yield strength and high yield limit. This means it can be stretched to a relatively high degree before breaking. The elasticity is preferably such that the yield limit is more than about 300%, preferably more than about 400%, more preferably more than about 550% and in particular preferably about 650% or more. Preferably this high yield limit is maintained over the temperature range during use of the heat exchanger. The yield limit can e.g. be measured according to ASTM D412.

The bonding agent can be a silicone or elastomeric based adhesive, preferably curing at about room temperature to a rubber like component which is water and gas tight. A bonding layer formed by said bonding agent is preferably pressure resistant to at least about 4 Bar, more preferably to about 10 Bar and even more preferably to about 20 Bar or above, wherein the bonding agent is preferably applied to unprimed metal of the parts. An example of such bonding agent is Dow Corning 7091, which has a normal temperature range of use between -55 and +180°C, and a yield limit of about 680%.

All kinds of combinations can be contemplated of yield limit, pressure resistance and temperature range.

Dow Corning® 7091 Adhesive/Sealant is a high-performance, neutral-cure silicone that cures at room temperature to a tough, flexible rubber, suitable for the use described herein. Dow Corning 7091 remains flexible and stable from -55° to 180°C (-67° to 356° F), and is a one-component, non-sag sealant. It can have a tear strength of 86 ppi and a tensile strength of about 363 psi. This adhesive is only provided by way of example and should not be considered limiting the scope in any way.

By using such a flexible bonding agent parts of the heat exchanger can be connected to each other, forming fluid, especially water, and gas tight seals without having to add gaskets, seals or the like, which will remain fluid and gas tight over a large temperature range. Moreover, such seals are relatively inexpensive and are pressure resistant to relatively high pressures. Furthermore, due to the high flexibility, problems with different expansion rates and directions of the different parts bonded together are avoided.

Alternative or additional to bonding other connecting techniques and materials could be used, such as but not limited to welding, screws, nuts and bolts, clamping.

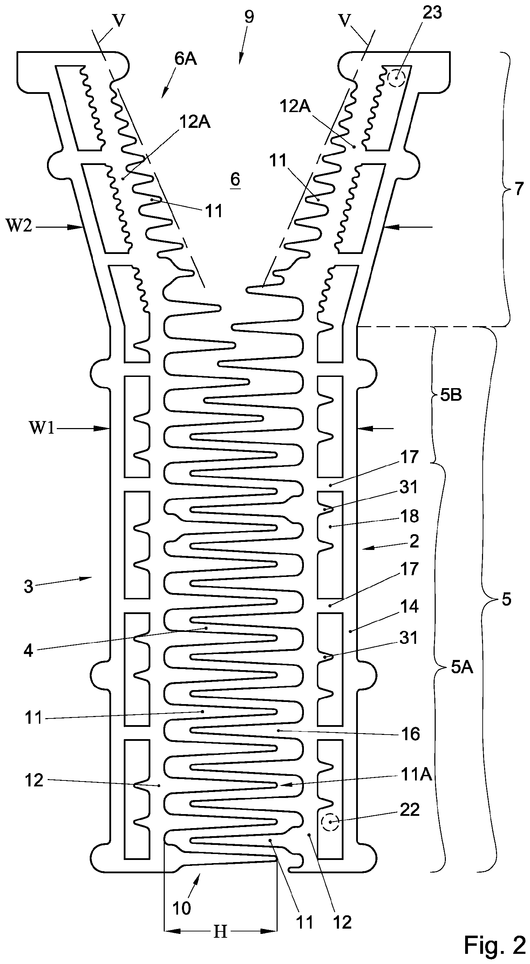

Fig. 1 shows, schematically in perspective view a heat exchanger 1 of the present disclosure, comprising a first part 2 and opposite second part 3. In fig. 2 the two parts 2, 3 of a body 1A of the heat exchanger 1 are shown in side view, in a position in which they will be connected to each other. As can be seen in this embodiment the side view the body is substantially Y-shaped, with a flue duct 4 at a lower first portion 5 and a flame receiving space 6 at an upper second portion 7. The first portion has a width, especially an average width W1 which is smaller than the average width W2 of the upper second portion 7. As indicated in fig. 1 the heat exchanger, and especially the flue duct 4 and the flame receiving space 6 have a main direction of flow, indicated by the arrow 8, extending from an inlet side 9 of the flame receiving space to an outlet 10 of the flue duct at the opposite side of the body 1A, in fig. 1, 2 and 4 therefore from top to bottom. A flame receiving space is to be understood as meaning a space in which during use flames and/or heated flue gasses from a burner 13 are introduced, wherein the burner 13 can be mounted on or inserted into the heat exchanger body 1A, especially into said space 6, and/or be formed at least partly by the body 1A. In fig. 1 by way of example a burner 13 is shown having a substantially rectangular, flat burner face 13A, in a known manner. The overall size of the burner 13 can be chosen depending on for example the body and the heat demand/capacity for the heat exchanger and/or a heating system connected thereto.

As will be further explained in the flue duct 4 a meandering flow path is defined for the gas flowing in said main direction 8, in order to intensify the contact and contact time between the gasses and the parts 2, 3. To that end each of the parts 2, 3 is provided with series of ribs 11 extending from an inner wall 12 of the relevant part 2, 3 in a direction of the opposite part 3, 2. The ribs 11 each have a length direction L substantially perpendicular to the main direction of flow 8 and substantially parallel to the inner wall 12 of the relevant part 2, 3. The ribs have a height direction H substantially perpendicular to the inner wall 12 and to the length direction L. In the preferred embodiments in which the parts 2, 3 have been made by extrusion the length L direction extends parallel to the extrusion direction, indicated by the arrow E. Preferably the main direction of flow 8 is also perpendicular to said extrusion direction E. Some or all of the ribs may extend substantially perpendicular to said inner wall 12 or some or all may include a different angle with said wall 12.

In the embodiments shown the first portion 5, which may have a substantially rectangular side view, comprises a first series of ribs 11 on each part 2, 3, ribs of one of the parts 2, 3 extending between ribs 11 of the first series of ribs of the opposite part 3, 2 and vice versa. Thus said meandering flow path is obtained through the flue duct 4, forcing the gasses to zig-zag through the duct 4. In a lower part 5A of the first portion 5 the height of the ribs 11 may be the same, whereas in an upper part 5B of the first portion the height H may decrease in the direction of the space 6. Thus in the direction of flow 8 in the gas duct 4 in the upper part 5B, where the temperature of the gas is relatively high, the available cross section of the flow path will be larger than in the lower part, wherein the temperature is lower. Thus the heat exchange between the gasses and the parts 2, 3, especially the ribs 11 can be improved even further.

It will be understood that especially when the parts are extruded the ribs will be closed elements having a cross section perpendicular to the length direction which will be continuous and the same over the length direction. In the embodiments shown the cross section is substantially triangular or trapezoid, although also other shapes and dimensions are possible. They have a base at the inner wall 12 and a top 11A at the opposite end, wherein the base 16 preferably is thicker than the top 11A.

In the upper second portion 7 of the body 1A a second series of ribs 11 is provided on each part, extending again from an inner wall part 12A of the first and second parts 2, 3, respectively. As can be seen the space 6 as such widens in the direction away from the duct 4, i.e. in a direction opposite to the main flow direction 8, towards the inlet 9. The ribs 11 of the second series have an increasing height H in the direction of the duct 4, such that the ribs closest to the inlet 9 are the lowest and the ribs 11 of the second series furthest from the inlet 9 are the highest, though preferably still lower than the height of the lowest rib 11 of the first series. Thus the space 6A between two imaginary planes V defined by the tops 11A of the ribs 11 of the second series is widens even more than the space 6 as such. Thus the contact between the ribs and the gas and/or flames is intensified when entering further into the body 1A.

Seen in the main direction of flow 8 of the gasses the adjacent ribs 11 of the opposite parts in the lower first portion 5 may overlap significantly, for example as much as 50%, 60% or even 75% or more. This means that the flow path of the gasses will force the gasses to pass close to the bottom portions or base 16 of the ribs, close to the relevant inner wall 12 to which they are connected. These bottom portions 16 will provide for the largest part for heat transfer between the gasses and the ribs.

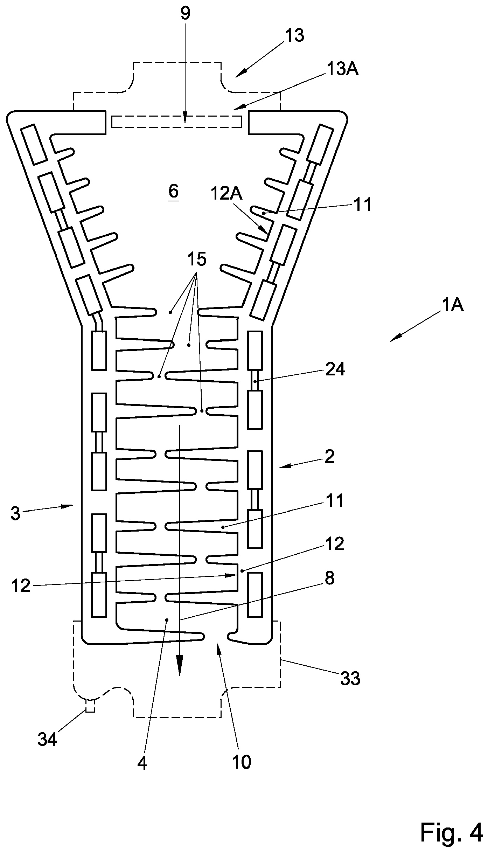

In fig. 4 an alternative embodiment is shown having the same basis shape and form as shown in fig. 1 and 2, but in which the ribs 11 of the first series, i.e. in the lower first part 5 are positioned such that pairs of ribs 11 are formed, each comprising a rib 11 of the first parts 2 and a rib 11 of the opposite second part 3, having facing top surfaces 11A, which can be flat or can be formed by a relatively sharp edge or can have any other shape. Between the top surfaces 11A of each pair a passage 15 is formed for gas flowing through said duct 4. As can be seen these passages 15 are not directly below each other, that is they are not in a straight line and thus form a meandering flow path for the gasses through the duct 4. In the embodiment shown the passages 15 are alternatingly placed closer to the wall 12 of the one part and to the wall 12 of the other part 3. Different positioning is obviously also possible. The cross section of the passages 15 perpendicular to the main direction of flow 8 may decrease towards the outlet 10, for example gradually or stepwise, in order to influence the flow of the gasses through the duct during transfer of heat and thus cooling of the gasses.

As can be seen in the embodiments shown the inner wall 12 can be connected to an outer wall 14, for example by a series of wall parts 17 extending preferably parallel to the ribs 11, preferably such that the parts 2, 3 can still be integrally extruded as mono blocks. Between the inner 12 and outer wall 14 water duct sections 18 may be formed, for example enclosed between said wall parts 17. These sections 18 may be interconnected to form one or several water ducts 19 extending along the flue duct 4 and/or the flame receiving space 6. These sections 18 can be connected to each other in the parts 2, 3 and/or by end parts 20, 21 as will be discussed.

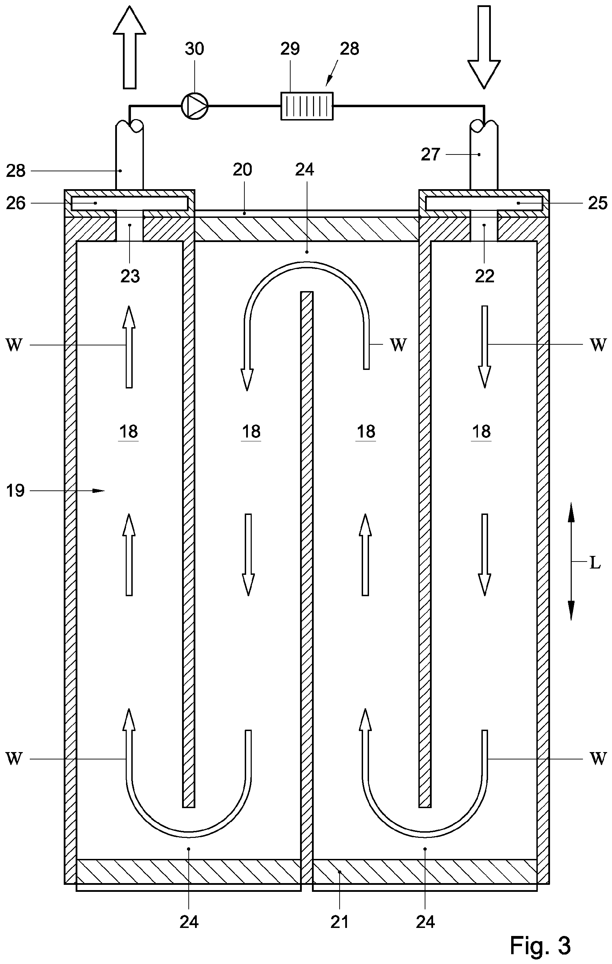

Fig. 3 shows schematically a part of a water duct 19 is shown, in this case comprising four sections 18, defining a meandering flow path between a water inlet 22 and a water outlet 23. As shown in fig. 1 and 3 in a heat exchanger 1 at two opposite sides of the body 1A and end part 20, 21 can be provided, closing off the opposite sides of the flue duct 4, space 6 and sections 18. These end parts can for example be bonded or glued to the parts 2, 3, thus forming both a solid but sufficiently flexible connection between the end parts 20, 21 and the parts 2, 3 and forming a sufficiently flexible and pressure resistant water and gas tight seal. In fig. 2 each part 2, 3 comprises 7 such sections 18, in fig. 4 nine sections 18. Any number of such sections is however possible. As can be seen in fig. 3 of a number of intermediate wall parts 18 an end part is taken away, for example by milling or sawing, such that a passage 24 is obtained between the wall part 18 and the adjacent end part 20, 21. Alternatingly these passages 24 are provided close to the first and second end parts 20, 21, such that the water duct meanders in a zig-zag pattern, providing for a flow as indicated by the arrows W. Preferably the main direction of flow of the water is counter flow to the main direction of flow 8 of the gas.

The first end part 20 in this embodiment comprises an inlet pipe 25 and an outlet pipe 26, to which in any suitable way respectively a return line 27 and a feeding line 28 of a heating circuit 28 can be connected. In the embodiment shown schematically a circuit 28 for space heating is shown, comprising for example any number of radiators 29 and a pump 30 for circulating water through the circuit 28 and the heat exchanger 1. The end part 20 can also be extruded and the inlet pipe 25 and outlet pipe 26 can be designed to connect to the water ducts 19 on either side of the heat exchanger body 1A. Suitable stops can be provided in said pipes 25, 26, if necessary, to close of an open end thereof.

In an alternative embodiment one or both of the end parts 20, 21 can be provided with sections for connecting sections 18 of the water duct 19, of a part 2, 3 and/or of sections between said parts 2, 3. In the latter case a water duct 19 could be formed encompassing the circumference of the body 1A, for example spiraling.

As can be seen in fig. 1 and 2, in some or all of the sections 18 small ribs 31 or the like can be provided, for increasing the heat transferring surface.

A heat exchanger according to the present invention has as an advantage over the prior art that virtually no machining is necessary for forming the flue duct 4 and the flame receiving space 6. When extruding the parts 2, 3 only an appropriate length Lb of the extruded profile has to be cut, after which the body 1A can be assembled. If a water duct is to be formed as for example shown in fig. 3, then only the passages have to be provided for by machining, resulting in only a very limited loss of material. No casts, cores or forming tools are necessary. It has moreover been found that extrusion has the advantage of lower surface roughness and greater hardness of the surface.

As can be seen in fig. 1 and 4 a closing element 33 can be provided over the outlet 10, for connecting the heat exchanger to an exhaust (not shown) and for receiving any condensate from the flue duct 4, to be disposed off, for example through a condensate outlet 34.

A heat exchanger 1 according to the present invention, and especially the body thereof can be easily manufactured, in a very economical way, with very limited loss of material. The capacity of a heat exchanger 1 can easily be adopted by choosing the length Lb of the body.

The invention is by no means limited to the embodiments as shown and/or described in this description. Many variations thereof are possible within the scope of the claims, including at least all combinations of parts and elements of the embodiments and parts thereof shown, in any combination or permutation. For example one or both of the parts 2, 3 can be made having separate channel parts above or next to each other for connecting to separate water or other medium circuits. Moreover the first and/or second parts can have other cross sections and can for example have further or less reclining walls, for providing a larger or smaller space 6. The parts 2m, 3, 20, 21 can be attached to each other using different means, such as screws, fasteners, clamps, welds or the like. Also other bonding agents can be used, for example two or more component agents. Moreover, even thickness of the bonding layers and heat conducting properties through the connection thus formed can be achieved by spacers as disclosed in WO2010/098666, or in another way, for example by gluing tools and moulds used for exact positioning of the parts during bonding, and/or by providing heat conducting elements connected to both parts, such as but not limited to pins, strips or similar, preferably metal elements inserted in between the bonded parts or to them, crossing said bonding connection. Shapes and dimensions, as well as positions of the different parts can be changed within the scope of the claims as pending. Although extrusion is the favored manufacturing method for the parts 2, 3, they could also at least in part be made differently, for example by casting and/or machining. The two parts 2, 3 may be formed as separate parts, preferably mono blocks. Alternatively they could be formed integrally as one element, in which case part of a connecting wall between said parts will have to be removed for forming an inlet and/or outlet 9, 10. Moreover, more or less channel parts 18 can be provided than shown, in each of the first and second parts 2, 3, whereas the channel parts, burner and exhaust can be provided in different positions. For example, the burner can be positioned partly or entirely inside the space 6.

## Claims

1. Heat exchanger (1), comprising a heat exchanger body (1A) made of light metal or light metal alloy, wherein the body (1A) comprises at least a flue duct (4) and a flame receiving space (6), wherein the body (1A) comprises two parts (2,3) at opposite sides of the flue duct (4) and flame receiving space (6), said two parts (2,3) substantially defining said flue duct (4) and flame receiving space (6), wherein the flue duct (4) and flame receiving space (6) define a main flow direction (8) for flue gas between an entry side of the flame receiving space (6) and an outlet of the flue duct (4), **characterized in that** each of said parts (2,3) comprises a first series of ribs (11) extending into the space between said two parts (2,3) and having a length direction (L) along the wall of the part (2,3) substantially perpendicular to the main flow direction (8) for flue gas, thus defining a meandering flow path of flue gasses between said flame receiving space (6) and said outlet (10) and a second series of ribs (11) extending in said flame receiving space (6), wherein between the ribs (11) of said second series of opposite parts (2,3) an open space (6A) is provided.

2. Heat exchanger (1) wherein the ribs (11) of the first and second series have a base (16) near a wall (12) of the respective parts (2,3) of the body (1A) which extends in said length direction substantially perpendicular to the main flow direction (8) of the flue gas and preferably all extend parallel to each other.

3. Heat exchanger according to claim 1 or 2, wherein the two parts (2,3) are made by extrusion, preferably having an extrusion direction parallel to the length direction (L) of the ribs (11).

4. Heat exchanger according to any one of the previous claims, wherein each of the two parts (2,3) is made as a mono-block.

5. Heat exchanger according to any one of the previous claims, wherein in side view perpendicular to the said length direction (L) of the ribs (11) the body (1A) has an average width (W1) in a first portion (5) comprising the first series of ribs (11) which is smaller than the average width (W2) of a second portion (7) of the body (1A) comprising the flame receiving space (6), wherein preferably in said side view the second portion (7) widens in a direction away from said first portion (5), wherein more preferably the first portion (5) in said side view has a substantially rectangular shape.

6. Heat exchanger according to any one of the previous claims, wherein the two parts (2,3) each comprise an inner surface from which said ribs (11) extend, wherein the second series of ribs (11) have a height (H) seen in a direction perpendicular to said inner surface which increases in a direction towards the flue duct (4), such that the ribs (11) closest to the flue duct (4) are higher than the ribs (11) further away from said flue duct (4).

7. Heat exchanger according to any one of the previous claims, wherein the ribs (11) of the first series of a first of the two parts (2,3) extend between the ribs (11) of the first series of the second of the two parts (2,3), wherein:
- the ribs (11) of the two parts (2,3) preferably extend further between each other near the outlet (10) of the flue duct (4) than near the flame receiving space (6), preferably such that the flue duct (4) between the ribs (11) near the flame receiving space (6) is wider than near the outlet (10), or.
- wherein the ribs (11) of the first series of opposite parts (2,3) of the body (1A) have facing top surfaces, positioned such that the ribs (11) of the first series of the two parts (2,3) form pairs with a passage (15) between facing top surfaces, wherein adjacent passages (15) are displaced relative to each other, such that said passages (15) form part of the meandering flue path (4).

8. Heat exchanger according to any one of the previous claims, wherein at least an number of the ribs (11) of the first series of the two parts (2,3) seen in the main flow direction (8) overlap each other at least 50% of their surface area, preferably at least 60%, such as for example at least 75%.

9. Heat exchanger according to any one of the previous claims, wherein each of the two parts (2,3) comprises a series of water duct sections (18), preferably having a length direction extending in a direction parallel to the length direction (L) of the ribs, wherein water duct sections (18) are interconnected by removing parts of a separating wall (17) between adjacent sections and/or by water duct connecting sections (24,25) provided external from said two parts (2,3), for example in end parts connecting the two parts (2,3) and closing off the flue duct (4) and flame receiving space (6).

10. Heat exchanger according to any one of the previous claims, wherein the two parts (2,3) are connected to each other by end parts mounted over opposite sides of the parts (2,3), closing off opposite sides of the flue duct (4) and flame receiving space (6), wherein the end parts are preferably glued or bonded to said parts, and wherein preferably at least one end part (20) comprises an inlet and/or outlet (22,23,25,26) for a water duct of the heat exchanger extending along at least part of the two parts.

11. Heat exchanger according to any one of the previous claims, wherein at the inlet side of the flame receiving space (6) a burner (13) is mounted on and/or in the body (1A), wherein preferably a closing element (33) is mounted over the outlet (10) of the flue duct (4), for connecting an exhaust and for forming a condensate receiving container.

12. Method for forming a heat exchanger body according to any one of the previous claims, **characterized in that** the two parts (2,3)
are formed by extrusion, each having an inner wall (17) from which parallel ribs (11) extend, which parts (2,3) are positioned with the inner surfaces (17) facing each other and are connected by end parts (20), such that said two parts (2,3) substantially define a flue duct (4) and a flame receiving space (6) opening into said flue duct, the flue duct (4) and flame receiving space (6) define a main flow direction (8) for flue gas between an entry side of the flame receiving space (6) and an outlet (10) of the flue duct (4) substantially perpendicular to an extrusion direction of the parts (2,3), preferably such that the ribs (11) define a meandering flow path (4) of flue gasses between said flame receiving space (6) and said outlet (10), and wherein between the ribs 11 of said opposite parts (2,3) in the flame receiving space (6) an open space (6A) is provided.

## Patentansprüche

1. Wärmetauscher (1), umfassend einen Wärmetauscherkörper (1A), hergestellt aus Leichtmetall oder einer Leichtmetalllegierung, wobei der Körper (1A) mindestens einen Abgaskanal (4) und einen Flammenaufnahmeraum (6) umfasst, wobei der Körper (1A) zwei Teile (2, 3) an entgegengesetzten Seiten des Abgaskanals (4) und des Flammenaufnahmeraums (6) umfasst, wobei die zwei Teile (2, 3) im Wesentlichen den Abgaskanal (4) und den Flammenaufnahmeraum (6) definieren, wobei der Abgaskanal (4) und der Flammenaufnahmeraum (6) eine Hauptfließrichtung (8) für Abgas zwischen einer Eintrittsseite des Flammenaufnahmeraums (6) und einem Auslass des Abgaskanals (4) definieren, **dadurch gekennzeichnet, dass** jeder der Teile (2, 3) eine erste Serie von Rippen (11) umfasst, die sich in den Raum zwischen den zwei Teilen (2, 3) erstrecken und eine Längsrichtung (L) entlang der Wand des Teils (2, 3) haben, die im Wesentlichen senkrecht zu der Hauptfließrichtung (8) für Abgas ist, um so einen sich schlängelnden Fließweg von Abgasen zwischen dem Flammenaufnahmeraum (6) und dem Auslass (10) zu definieren, und eine zweite Serie von Rippen (11), die sich in den Flammenaufnahmeraum (6) erstrecken, wobei zwischen den Rippen (11) der zweiten Serie von entgegengesetzten Teilen (2, 3) ein offener Raum (6A) bereitgestellt ist.

2. Wärmetauscher (1), wobei die Rippen (11) der ersten und zweiten Serien eine Basis (16) nahe einer Wand (12) der jeweiligen Teile (2, 3) des Körpers (1A) haben, die sich in der Längsrichtung im Wesentlichen senkrecht zu der Hauptfließrichtung (8) des Abgases erstreckt, und sich bevorzugt alle parallel zueinander erstrecken.

3. Wärmetauscher nach Anspruch 1 oder 2, wobei die zwei Teile (2, 3) durch Extrusion hergestellt werden, bevorzugt mit einer Extrusionsrichtung parallel zu der Längsrichtung (L) der Rippen (11).

4. Wärmetauscher nach einem der vorhergehenden Ansprüche, wobei jeder der zwei Teile (2, 3) als ein Monoblock hergestellt ist.

5. Wärmetauscher nach einem der vorhergehenden Ansprüche, wobei in Seitenansicht senkrecht zu der Längsrichtung (L) der Rippen (11) der Körper (1A) eine durchschnittliche Breite (W1) in einem ersten Abschnitt (5), umfassend die erste Serie von Rippen (11), hat, der kleiner ist als die durchschnittliche Breite (W2) eines zweiten Abschnitts (7) des Körpers (1A), umfassend den Flammenaufnahmeraum (6), wobei bevorzugt in der Seitenansicht der zweite Abschnitt (7) sich in einer Richtung weg von dem ersten Abschnitt (5) weitet, wobei bevorzugter der erste Abschnitt (5) in der Seitenansicht eine im Wesentlichen rechteckige Form hat.

6. Wärmetauscher nach einem der vorhergehenden Ansprüche, wobei die zwei Teile (2, 3) jeweils eine Innenfläche umfassen, von der aus sich die Rippen (11) erstrecken, wobei die zweite Serie von Rippen (11) eine Höhe (H) hat, gesehen in einer Richtung senkrecht zu der Innenfläche, die in einer Richtung zu dem Abgaskanal (4) hin so zunimmt, dass die Rippen (11), die dem Abgaskanal (4) am nächsten sind, höher sind als die Rippen (11), die weiter weg von dem Abgaskanal (4) sind.

7. Wärmetauscher nach einem der vorhergehenden Ansprüche, wobei die Rippen (11) der ersten Serie eines ersten der zwei Teile (2, 3) sich zwischen den Rippen (11) der ersten Serie des zweiten der zwei Teile (2, 3) erstrecken, wobei:
- die Rippen (11) der zwei Teile (2, 3) bevorzugt sich weiter zwischen einander nahe dem Auslass (10) des Abgaskanals (4) als nahe dem Flammenaufnahmeraum (6) erstrecken, bevorzugt so, dass der Abgaskanal (4) zwischen den Rippen (11) nahe dem Flammenaufnahmeraum (6) weiter ist als nach dem Auslass (10), oder
- wobei die Rippen (11) der ersten Serie von entgegengesetzten Teilen (2, 3) des Körpers (1A) einander zugewandte obere Flächen haben, die so positioniert sind, dass die Rippen (11) der ersten Serie der zwei Teile (2, 3) Paare mit einem Durchlass (15) zwischen einander zugewandten oberen Flächen bilden, wobei angrenzende Durchgänge (15) zueinander so verschoben sind, dass die Durchlässe (15) Teil des sich schlängelnden Abgaswegs (4) bilden.

8. Wärmetauscher nach einem der vorhergehenden Ansprüche, wobei mindestens eine Anzahl von Rippen (11) der ersten Serie der zwei Teile (2, 3), gesehen in der Hauptfließrichtung (8), einander mit mindestens 50 % ihres Oberflächenbereichs, bevorzugt mit mindestens 60 %, wie etwa mit mindestens 75 %, überlappen.

9. Wärmetauscher nach einem der vorhergehenden Ansprüche, wobei jeder der zwei Teile (2, 3) eine Serie von Wasserleitungssektionen (18) umfasst, bevorzugt mit einer Längsrichtung, sich erstreckend in eine Richtung parallel zu der Längsrichtung (L) der Rippen, wobei Wasserleitungssektionen (18) miteinander verbunden sind durch Entfernen von Teilen einer Trennwand (17) zwischen angrenzenden Sektionen und/oder durch Wasserleitungsverbindungssektionen (24, 25), extern von den zwei Teilen (2, 3) bereitgestellt, zum Beispiel in Endteilen, die die zwei Teile (2, 3) verbinden und den Abgaskanal (4) und den Flammenaufnahmeraum (6) verschließen.

10. Wärmetauscher nach einem der vorhergehenden Ansprüche, wobei die zwei Teile (2, 3) miteinander verbunden sind durch Endteile, die an entgegengesetzten Seiten der Teile (2, 3) befestigt sind, die entgegengesetzte Seiten des Abgaskanals (4) und des Flammenaufnahmeraums (6) verschließen, wobei die Endteile bevorzugt an die Teile geklebt oder gebunden sind, und wobei bevorzugt mindestens ein Endteil (20) einen Einlass und/oder einen Auslass (22, 23, 25, 26) für eine Wasserleitung des Wärmetauschers, sich entlang mindestens eines Teils der zwei Teile erstreckend, umfasst.

11. Wärmetauscher nach einem der vorhergehenden Ansprüche, wobei an der Einlassseite des Flammenaufnahmeraums (6) ein Brenner (13) an und/oder in dem Körper (1A) befestigt ist, wobei bevorzugt ein Verschließelement (33) über dem Auslass (10) des Abgaskanals (4) befestigt ist, um einen Abzug zu verbinden und um einen Kondensataufnahmebehälter zu bilden.

12. Verfahren zur Bildung eines Wärmetauscherkörpers nach einem der vorhergehenden Ansprüche, **dadurch gekennzeichnet, dass** die zwei Teile (2, 3) durch Extrusion gebildet sind, mit jeweils einer Innenwand (17), von der sich parallel Rippen (11) erstrecken, die Teile (2, 3) mit den Innenflächen (17) zueinander gewandt positioniert sind und durch Endteile (20) so verbunden sind, dass die zwei Teile (2, 3) im Wesentlichen einen Abgaskanal (4) und einen Flammenaufnahmeraum (6), der sich in den Abgaskanal öffnet, definieren, der Abgaskanal (4) und der Flammenaufnahmeraum (6) eine Hauptfließrichtung (8) für Abgas im Wesentlichen senkrecht zu einer Extrusionsrichtung der Teile (2, 3) zwischen einer Eintrittsseite des Flammenaufnahmeraums (6) und einem Auslass (10) des Abgaskanals definieren, bevorzugt so, dass die Rippen (11) einen sich schlängelnden Fließweg (4) von Abgasen zwischen dem Flammenaufnahmeraum (6) und dem Auslass (10) definierten und wobei zwischen den Rippen (11) der entgegengesetzten Teile (2, 3) in dem Flammenaufnahmeraum (6) ein offener Raum (6A) bereitgestellt ist.

## Revendications

1. Échangeur thermique (1), comprenant un corps d'échangeur thermique (1A) constitué d'un métal léger ou d'un alliage métallique léger, dans lequel le corps (1A) comprend au moins un conduit de fumée (4) et un espace de réception de flammes (6), dans lequel le corps (1A) comprend deux parties (2, 3) au niveau des côtés opposés du conduit de fumée (4) et de l'espace de réception de flammes (6), lesdites deux parties (2, 3) définissant sensiblement ledit conduit de gaz de fumée (4) et l'espace de réception de flammes (6), le conduit de fumée (4) et l'espace de réception de flammes (6) définissant une direction d'écoulement principal (8) pour les gaz de fumée entre un côté d'entrée de l'espace de réception de flammes (6) et une sortie du conduit de fumée (4), **caractérisé en ce que** chacune desdites parties (2, 3) comprend une première série de nervures (11) s'étendant dans l'espace entre lesdites deux parties (2, 3) et ayant une direction longitudinale (L) le long de la paroi de la partie (2, 3) sensiblement perpendiculaire à la direction d'écoulement principal (8) des gaz de fumée, définissant ainsi un trajet d'écoulement sinueux des gaz de fumée entre ledit espace de réception de flammes (6) et ladite sortie (10) et une seconde série de nervures (11) s'étendant dans ledit espace de réception de flammes (6), dans lequel entre les nervures (11) de cette dite seconde série de parties opposées (2, 3) un espace ouvert (6A) est fourni.

2. Échangeur thermique (1) dans lequel les nervures (11) des première et seconde séries ont une base (16) proche d'une paroi (12) des parties respectives (2, 3) du corps (1A) qui s'étend dans ladite direction longitudinale sensiblement perpendiculaire à la direction d'écoulement principal (8) du gaz de fumée et de préférence s'étendent toutes parallèlement les unes aux autres

3. Échangeur thermique selon les revendications 1 ou 2, dans lequel les deux parties (2, 3) sont réalisées par extrusion, ayant de préférence une direction d'extrusion parallèle à la direction longitudinale (L) des nervures (11).

4. Échangeur thermique selon l'une quelconque des revendications précédentes, dans lequel chacune des deux parties (2, 3) est constituée sous la forme d'un monobloc.

5. Échangeur thermique selon l'une quelconque des revendications précédentes, dans lequel dans une vue latérale perpendiculaire à ladite direction longitudinale (L) des nervures (11) le corps (1A) a une largeur moyenne (W1) dans une première partie (5) comprenant la première série de nervures (11) qui est plus petite que la largeur moyenne (W2) d'une seconde partie (7) du corps (1A) comprenant l'espace de réception de flammes (6), dans lequel de préférence dans ladite vue latérale la seconde partie (7) s'élargit dans une direction s'éloignant de ladite première partie (5), dans lequel de manière plus préférée la première partie (5) de ladite vue latérale a une forme sensiblement rectangulaire.

6. Échangeur thermique selon l'une quelconque des revendications précédentes, dans lequel les deux parties (2, 3) comprennent chacune une surface intérieure à partir de laquelle s'étendent lesdites nervures (11), dans lequel la seconde série de nervures (11) a une hauteur (H) vue dans une direction perpendiculaire à ladite surface intérieure qui augmente dans une direction allant vers le conduit de fumée (4), de sorte que les nervures (11) les plus proches du conduit de fumée (4) sont plus hautes que les nervures (11) plus éloignées dudit conduit de fumée (4).

7. Échangeur thermique selon l'une quelconque des revendications précédentes, dans lequel les nervures (11) de la première série d'une première des deux parties (2, 3) s'étendent entre les nervures (11) de la première série de la seconde des deux parties (2, 3) dans lequel :
- les nervures (11) des deux parties (2, 3) s'étendent de préférence plus loin entre elles à proximité de la sortie (10) du conduit de fumée (4) qu'à proximité de l'espace de réception de flammes (6), de préférence de sorte que le conduit de fumée (4) entre les nervures (11) proches de l'espace de réception de flammes (6) est plus large qu'à proximité de la sortie (10), ou
- dans lequel les nervures (11) des premières séries des parties opposées (2, 3) du corps (1A) ont des surfaces de sommet en vis-à-vis, positionnées de sorte que les nervures (11) de la première série des deux parties (2, 3) forment des paires ayant un passage (15) entre les surfaces de sommet en vis-à-vis, dans lequel des passages adjacents (15) sont déplacés l'un par rapport à l'autre, de sorte que lesdits passages (15) forment une partie du trajet de fumée sinueux (4).

8. Échangeur thermique selon l'une quelconque des revendications précédentes, dans lequel au moins plusieurs des nervures (11) de la première série des deux parties (2, 3) vues dans la direction d'écoulement principal (8) se recouvrent d'au moins 50 % de leur surface superficielle, de préférence d'au moins 60 %, tel que par exemple au moins 75 %.

9. Échangeur thermique selon l'une quelconque des revendications précédentes, dans lequel chacune des deux parties (2, 3) comprend une série de tronçons de conduite d'eau (18), de préférence ayant une direction longitudinale s'étendant dans une direction parallèle à la direction longitudinale (L) des nervures, dans lequel les tronçons de conduite d'eau (18) sont reliés mutuellement en enlevant des parties d'une paroi de séparation (17) entre des tronçons adjacents et/ou des tronçons de liaison de conduite d'eau (24, 25) agencés à l'extérieur à partir desdites deux parties (2, 3) par exemple dans des parties d'extrémité reliant les deux parties (2, 3) et fermant le conduit de fumée (4) et l'espace de réception de flammes (6).

10. Échangeur thermique selon l'une quelconque des revendications précédentes, dans lequel les deux parties (2, 3) sont reliées l'une à l'autre par des parties d'extrémité montées sur des côtés opposés des parties (2, 3), fermant les côtés opposés du conduit de fumée (4) et de l'espace de réception de flammes (6), dans lequel les parties d'extrémité sont de préférence collées ou fixées sur lesdites parties, et dans lequel de préférence au moins une partie d'extrémité (20) comprend une entrée et/ou une sortie (22, 23, 25, 26) pour une conduite d'eau de l'échangeur thermique s'étendant le long d'au moins une partie des deux parties.

11. Échangeur thermique selon l'une quelconque des revendications précédentes, dans lequel du côté entrée de l'espace de réception de flammes (6) un brûleur (13) est monté sur et/ou dans le corps (1A), dans lequel de préférence un élément de fermeture (33) est monté sur la sortie (10) du conduit de fumée (4), pour connexion à un échappement et pour former un récipient de réception de condensat.

12. Méthode pour former un corps d'échangeur thermique selon l'une quelconque des revendications précédentes, **caractérisée en ce que** les deux parties (2, 3) sont formées par extrusion, ayant chacune une paroi intérieure (17) à partir de laquelle s'étendent des nervures parallèles (11), lesquelles parties (2, 3) sont positionnées ayant leur surface intérieure (17) en vis-à-vis l'une de l'autre et sont reliées par des parties d'extrémité (20), de sorte que lesdites deux parties (2, 3) définissent sensiblement un conduit de fumée (4) et un espace de réception de flammes (6) ouvrant dans ledit conduit de fumée, le conduit de fumée (4) et l'espace de réception de flammes (6) définissent une direction d'écoulement principal (8) du gaz de fumée entre un côté entrée de l'espace de réception de flammes (6) et une sortie (10) du conduit de fumée (4) sensiblement perpendiculaire à une direction d'extrusion des parties (2, 3), de préférence de telle sorte que les nervures (11) définissent un trajet d'écoulement sinueux (4) des gaz de fumée entre ledit espace de réception de flammes (6) et ladite sortie (10), et dans laquelle entre les nervures (11) desdites parties opposées (2, 3) dans l'espace de réception de flammes (6) un espace ouvert (6A) est fourni.
